# EUROPÄISCHE PATENTSCHRIFT

(11) **EP 3 685 102 B1**
(45) Veröffentlichungstag und Bekanntmachung des Hinweises auf die Patenterteilung: **01.11.2023**
(21) Anmeldenummer: 18785508.5
(22) Anmeldetag: 20.09.2018
(51) Int. Cl.: F24B 3/00, A47J 37/07, B65D 1/24, B65D 81/36

(54) **SYSTEM BESTEHEND AUS EINEM FEUERKORB UND EINEM GEFACHE**
SYSTEM CONSISTING OF A BRAZIER AND A SEPARATOR
SYSTÈME COMPRENANT UN BRASERO ET UN SÉPARATEUR

(30) Priorität: 20.09.2017 DE 202017004859 U
(43) Veröffentlichungstag der Anmeldung: 29.07.2020
(73) Patentinhaber: Kaiser, Thomas, 87463 Schrattenbach (DE); Wassermann, Christian, 87647 Kraftisried (DE)
(72) Erfinder: Kaiser, Thomas, 87463 Schrattenbach (DE); Wassermann, Christian, 87647 Kraftisried (DE)
(74) Vertreter: Gille Hrabal Partnerschaftsgesellschaft mbB Patentanwälte
(86) Internationale Anmeldenummer: PCT/EP2018/000439
(87) Internationale Veröffentlichungsnummer: WO 2019/057328

(56) Entgegenhaltungen:
- WO-A1-2005/112710
- DE-U1- 8 620 597
- DE-U1- 29 716 383
- DE-U1- 29 716 383
- DE-U1-202011 102 427
- DE-U1-202013 005 681
- DE-U1-202015 005 487
- DE-U1-202015 005 487
- NL-A- 6 505 094
- US-A- 2 424 665
- US-B1- 6 186 345
- höfats GmbH: "höfats CUBE - || Feuerkorb | Grill | Hocker || - viel mehr als einfach nur ein Feuerkorb.", , 13 September 2017 (2017-09-13), pages 1-2, XP054981437, Retrieved from the Internet: URL:https://www.youtube.com/watch?v=pFU0GL LKz_8 [retrieved on 2021-02-18]

## Beschreibung

Die Erfindung betrifft ein System bestehend aus einem Feuerkorb für Holz und ähnliche Brennstoffe und einem Gefache. Die Erfindung betrifft außerdem eine Verwendung des Systems.

Derartige Feuerkörbe werden im Außenbereich (Garten, Terrasse, usw.) in Art eines mobilen Lagerfeuers eingesetzt. So ist aus der DE 202 10 747 U1 ein "topfförmiger" Feuerkorb mit einer Grillauflage bekannt, der eine geschlitzte Ummantelung aufweist, damit ausreichend Luft an den Brennstoff gelangt. Problematisch ist hierbei jedoch, dass solch ein sperriger Feuerkorb schwierig zu transportieren ist, da z. B. Handgriffe fehlen. Da gerade Grillplätze oft nur per Fuß zu erreichen sind und sämtliche Grillutensilien häufig über längere Strecken zu tragen sind, wurde in der DE 202 16 661 ein Grillbausatz vorgeschlagen, bei dem ein Behältnis für Grillkohle so geformt ist, dass dieser platzsparend auf einen handelsüblichen Getränkekasten gelegt und so als eine Einheit getragen werden kann. Am Grillplatz wird der Kohlensack zusammen mit einer Metallbodenwanne aus dem Getränkekasten entnommen und dann in gewissem Abstand vom Getränkekasten entzündet, da letzterer aus Kunststoff besteht und somit nicht hitzebeständig ist. Die Einheit aus Bodenwanne und Kohlensack besitzt zudem nur eine geringe Brennzeit, so dass diese Einheit nach dem Grillen für eine Beleuchtung und/oder als Wärmespender in späteren Abendstunden nicht geeignet ist. Zudem wird die Bodenwanne direkt auf dem Erdboden aufgelegt, so dass sich die Bediener zum Nachlegen oder Wenden des Grillguts bücken müssen, was sehr beschwerlich ist.

Die Druckschrift DE 20 2015 005 487 U1 offenbart einen Feuerkorb. Der Feuerkorb weist in seinem oberen Bereich Durchbrüche auf. Diese Durchbrüche sind so gestaltet, dass Kinder nicht in die offene Flamme greifen können.

Die Druckschriften DE 20 2013 005681 U1 und DE 20 2011 1024 27 U1 offenbaren Feuerkörbe.

Die Druckschriften NL 6505094 A, US 6 186 345 B1, DE 297 16 383 U1 offenbaren Flaschenkisten.

Daher soll ein derartiges System mit Feuerkorb hinsichtlich Bedienbarkeit und Handhabung verbessert werden.

Diese Aufgabe wird gelöst durch die Merkmale des Anspruchs 1. Vorteilhafte Ausführungen sind Gegenstand der abhängigen Ansprüche. Der Nebenanspruch betrifft eine Verwendung.

Der Feuerkorb kann relativ preisgünstig und stabil, insbesondere aus Stahlblech hergestellt werden und ist auch als Grill im Freien einsetzbar. Dabei können in die Außenwand bzw. die Ummantelung des so geformten Feuerkorbs für das Brenngut auch Firmenlogos, Embleme etc. eingestanzt oder eingeschnitten werden, wodurch auch die Luftzufuhr zum Brenngut, meist Holzscheite gesteigert wird. Durch den zumindest weitgehend geschlossenen Boden aus Metallblech wird der Untergrund vor Brandschäden geschützt und das Brennmaterial oder Glut kann wegen der nach unten hin geschlossene Form nicht aus dem Feuerkorb herausfallen. Auch die Benutzer sind hierbei vor Funkenflug weitgehend geschützt, wobei die oberen Tragegriffe der metallenen Stapelkiste von Luft umströmt sind und so zumindest mit Handschuhen angefasst werden können, um z. B. den Feuerkorb mit brennendem Holz am Grillplatz umzusetzen.

Aufgrund der Stapelkisten-, bevorzugt Getränkekisten-Form des Feuerkorbs wird mit den als Tragegriffe vorgesehenen Öffnungen oder Durchbrüchen im Betrieb des Feuerkorbs der angenehme Eindruck eines offenen Feuers geschaffen. Nach dem Erlöschen des Feuers können der Feuerkorb und darin befindliche Feuerreste relativ rasch abkühlen, da der Feuerkorb aus Stahlblech, ggf. auch aus Edelstahl oder Aluminium besteht und eine große Abkühlflache bietet.

An der vorgeschlagenen, metallenen Stapelkiste sind mindestens zwei, bevorzugt vier Hand- oder Tragegriffe ausgebildet, so dass dieser Feuerkorb bequem getragen werden kann. Vorzugsweise ist am Eckbereich dieses Feuerkorb (nahe den Handgriffen) ein Flaschenöffner in die Ummantelung mit eingeformt, so dass dieser praktisch immer zur Hand ist und nicht verloren gehen kann. Hierbei kann die Öffnung für den Flaschenöffner durch Stanzen oder Laserschneiden einfach in die Außenwand des Feuerkorbs eingearbeitet werden, wobei durch die Metallbauweise der Ummantelung eine ausreichende Stabilität gewährleistet ist.

Zusätzlich kann der Feuerkorb bzw. dessen Ummantelung mit einem Deckel am oberen Ende verschlossen werden, der insbesondere eine Sitzfläche ausbildet. Ebenso kann im Betrieb ein Grillrost aufgelegt werden, der an der Ummantelung in verschiedenen Höhenposition eingehängt werden. Am unteren Ende des Feuerkorbs sind bevorzugt vier kurze Stützfüße vorgesehen, die bevorzugt kostengünstig am Feuerkorb einteilig angeformt sind, also z. B. beim Ausstanzen oder Laserschneiden des Stahlblechs mithergestellt werden. Hierdurch wird ein Sicherheitsabstand zum Erdboden eingehalten und bei einer Übereinanderstapelung mehrerer Feuerkörbe (z. B. um deren Leuchtwirkung zu erhöhen oder eine bequeme Arbeitshöhe einzustellen) ein seitliches Verrutschen vermieden. Dies gilt auch für die Logistik derartiger Stapelkisten als Feuerkörbe, insbesondere wenn diese (großteils) mit Getränkeflaschen gefüllt sind. So kann ein relativ hoher Stapel mit einem Gabelstapler umgesetzt werden, um z. B. Großveranstaltungen effektiv zu beliefern. Es kann jedoch in das Gefache des Feuerkorbs auch Grillzubehör, wie Behälter für Grillanzünder etc. eingefüllt sein. Das Gefache als Abstandshalter für die Getränkeflaschen ist als Pappstreifengitter gestaltet, so dass dieses auch zum Entzünden eines Feuers im Feuerkorb verwendet werden kann.

Durch das Ineinandergreifen der Stützfüße in die stabile, rahmenartige Ummantelung können mehrere Feuerkörbe säulenartig übereinander gestapelt werden, so dass durch diesen formschlüssigen Eingriff relativ hohe, aber stabile Säulen errichtet werden können, um z. B. die Ausleuchtung durch dann in mehreren Ebenen brennende Feuer zu steigern. Dies ergibt gerade bei größeren Abendveranstaltungen besondere Beleuchtungseffekte durch die "offenen" Feuer auf mehreren Ebenen, insbesondere mit Hinterleuchtung der durchbrochenen Logos oder Embleme z. B. des Veranstalters oder Sponsors, ebenso eine angenehme Wärmeentwicklung z. B. in 0,7 und 1,4 Meter Höhe vom Erdboden, gerade bei kühleren Außentemperaturen. Zudem können die Feuerkörbe in platzsparender Weise aufgestapelt und damit platzsparend gelagert werden, z. B. bei regelmäßig stattfindenden Veranstaltungen. Durch die Stapelkisten lässt sich die "Arbeitshöhe" z. B. bei aufgelegtem Grillrost einstellen, so dass die Bedienung sehr bequem ist. Durch zwei derartiger, als Feuerkorb ausgelegter Stapelkisten kann ein bequemer Sitz erstellt werden, oder durch drei Stapelkisten übereinander eine Tischfläche. Da jede Stapelkiste als Feuerkorb ausgelegt ist, kann dann z. B. in Laufe einer Veranstaltung ein Dutzend dieser Feuerkörbe jeweils einzeln um die Gesellschaft herum ringartig verteilt werden, um Licht und Wärme zu liefern.

Weitere Vorteile der Erfindung ergeben sich aus der nachfolgenden Beschreibung eines Ausführungsbeispiels anhand der Zeichnungen. Hierbei zeigen:
Fig. 1 eine perspektivische Darstellung eines Feuerkorbes,
Fig. 2 eine Perspektivansicht des Feuerkorbs gemäß Fig. 1 in gefüllter Stellung, und
Fig. 3 eine Darstellung mit mehreren aufeinandergestapelten Feuerkörben.

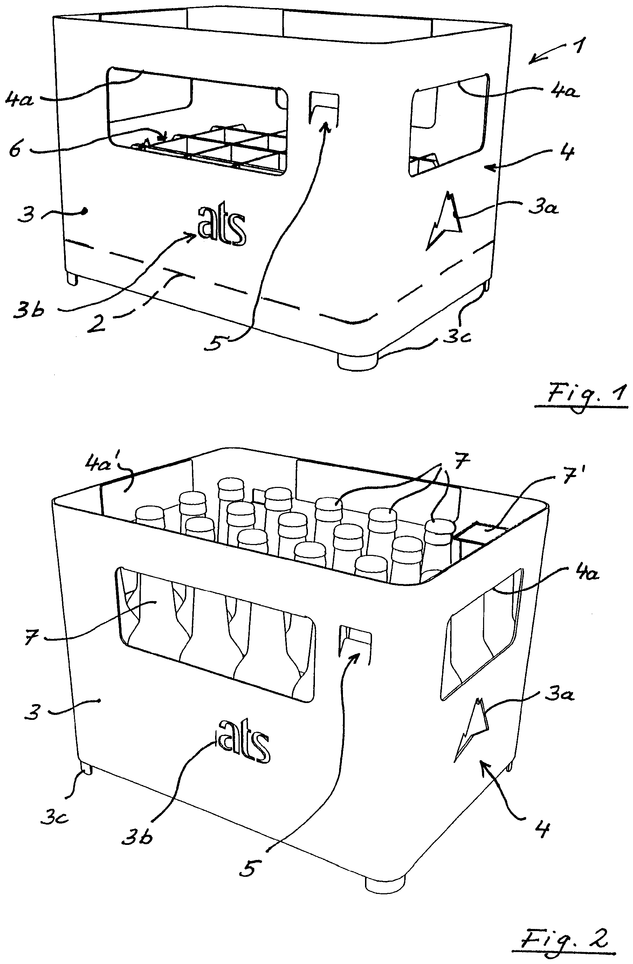

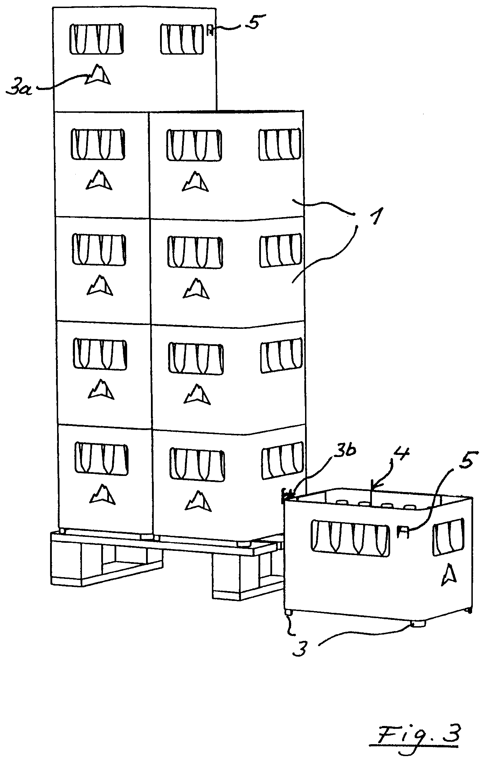

Fig. 1 zeigt einen Feuerkorb 1 zur Verbrennung von Holz und/oder ähnlichen Brennstoffen (wie z. B. Grillkohle) und besteht aus einem in Strichlinien angedeuteten, hitzebeständigen Boden 2, der von einer Ummantelung 3 umfasst bzw. umgeben ist. Die aus Metall, wie bevorzugt Stahlblech geformte Ummantelung 3 weist in ihrem oberen Bereich mehrere (bevorzugt ausgestanzte) Durchbrüche als Tragegriffe 4a auf, so dass sich die Form einer Stapelkiste 4, insbesondere einer handelsüblichen Getränkekiste 4 ergibt und das im Feuerkorb 1 brennende Holz gut sichtbar ist sowie die Umgebung beleuchten bzw. erwärmen kann. Diese Durchbrüche dienen auch zur Brennluftzuführung für eine gleichmäßige Verbrennung. Zudem können Logos 3a (hier ein stilisiertes Bergmotiv) und/oder Embleme 3b (hier die Buchstaben "ats" als Beispiel) in die Ummantelung 3 eingearbeitet sein (insbesondere durch Laserschneiden), so dass Brennluft auch durch diesen Bereich der Ummantelung 3 zugeführt werden kann. Der Feuerkorb 1 weist zudem Stützfüße 3c auf, die bevorzugt einteilig mit der Ummantelung 3 hergestellt sind und in der Stapelstellung (Fig. 3) als seitliche Verrastung dienen. Zudem wird dadurch ein gewisser Abstand zur Stellfläche (Erdboden) eingehalten. Die Stützfüße 3c können auch als Bauteil am Boden 2 oder der Ummantelung 3 angebracht sein und jeweils eine konische Form aufweisen, um sich beim Stapeln gegenüber dem oberen Rand der Ummantelung 3 sicher zu zentrieren.

In Fig. 2 ist die als Feuerkorb 1 ausgelegte Stapelkiste 4 mit vielen Getränkebehältern 7 in Form üblicher Kronkorken-Flaschen befüllt, wobei diese durch gitterförmige Abstandshalter 6 (vgl. Fig. 1 ) positioniert sind. Die in der Stapelkiste 4 eingefügten Abstandshalter 6 sind aus brennbarem Material und zwar Pappe hergestellt, so dass diese zum Anzünden des Feuers im Feuerkorb 1 verwendet werden. In der hier rechten Ecke ist durch ein Rechteck ein Behälter für Grillzubehör 7' angedeutet, z. B. für einen Grillanzünder. Es können auch weitere Getränkeflaschen durch solches Grillzubehör ersetzt sein, z. B. für Grillkohle. Im häufigsten Verwendungsfall ist jedoch zumindest der Hauptteil der Stapelkiste 4 mit Flaschen befüllt, die dann am Grillplatz mit einem Flaschenöffner 5 bequem geöffnet werden können, der in der Ummantelung 3 benachbart deren Eckbereich eingestanzt oder lasergeschnitten ist. Die Form mit etwas zum Innern hin eingebogener Lasche ist z. B. in der DE 20 2013 006 696 der Anmelder näher gezeigt. Hierdurch fallen die Kronkorken zudem in das Innere des Feuerkorbs 1 und nicht in die Umgebung.

Der Feuerkorb 1 ist vollständig aus hitzebeständigem Metall hergestellt, insbesondere aus leicht verformbaren Stahlblechen. So können im Tiefziehverfahren z. B. zwei Hälften der Ummantelung 3 hergestellt werden, die dann zusammen mit dem Boden 2 gefügt werden, insbesondere miteinander verschweißt werden. Dabei kann der Boden 2 des Feuerkorbs 1 auch an einer weitgehend umlaufenden Abkantung der Ummantelung 3 punktgeschweißt werden, um auch bei dünnen Blechstärken eine hohe Stabilität zu erzielen ist. Die ausgeschnittenen Laschen für die Tragegriffe 4a können auch nach innen hochgeklappt werden, wie dies mit dem Bezugszeichen 4a' in Fig. 2, links angedeutet ist. Hierdurch ergibt sich auch eine saubere, abgerundete Kante, um die Stapelkiste 4 bequem tragen zu können, z. B. zu einem Grillplatz. Auf der Stapelkiste 4 kann auch eine plattenförmige Sitzfläche 7 aufgelegt werden, die dann für den Grillbetrieb durch einen (rechteckigen) Grillrost ausgetauscht werden kann.

In Fig. 3 sind mehrere Feuerkörbe 1 säulenartig übereinander gestapelt, wie sie z. B. in einem Getränkemarkt oder einer Brauerei mit Bierflaschen befüllt angeboten werden können. Nach dem Transport (mit Pkw oder auch per Lkw mit Gabelstapler bei Großveranstaltungen) zu einem Grillplatz kann die (hier rechts in Einzelform) dargestellte Getränkekiste 4 als Feuerkorb 1 verwendet werden, wobei die Getränkebehälter 7 (und ggf. zusätzliches Grillzubehör 7') entnommen werden. Die hier z. B. eingefüllten Bierflaschen können am "integrierten" Flaschenöffner 5 bequem geöffnet werden, wobei der Flaschenöffner 5 praktisch nicht verloren gehen kann.

Am Einsatzort können auch mehrere Feuerkörbe 1 bzw. Kisten 4 (ohne Flascheninhalt) übereinander gestapelt werden, wobei sich eine erhöhte Sitz- oder auch Tischfläche ergibt. Für eine verbesserte Beleuchtungswirkung können, wie hier in Fig. 3 dargestellt, sogar vier oder fünf Feuerkörbe 1 säulenartig übereinander gestapelt sein, wobei sich durch den Formschluss der Stützfüße 3c innerhalb der stabilen, rahmenartigen Ummantelung 3 eine exakte, sichere Positionierung ergibt. Durch die Öffnungen für die Traggriffe 4a lassen sich Holzscheite bequem von allen Seiten nachlegen, so dass eine erhöhte Beleuchtungswirkung und auch Wärmeabstrahlung erzielt wird, wie dies gerade an kühleren Abenden erwünscht ist. Im Rahmen der Veranstaltung können die Feuerkorb-Stapel dann auch umgebaut werden, da jede Stapelkiste 4 als Feuerkorb 1 dienen kann. So können z. B. vier Stapel aus je fünf Stapelkisten 4 (etwa eine Paletten-Beladung) um eine Gruppe von z. B. zehn Leuten herum einzeln in Ringform umgesetzt werden, also um den Grillplatz herum aufgestellt werden, um so Licht und Wärme für diese Gruppe zu liefern.

## Patentansprüche

1. System bestehend aus einem Feuerkorb und einem Gefache, wobei
- der Feuerkorb für Holz und ähnliche Brennstoffe ausgebildet ist, einen hitzebeständigen, derart geschlossenen Boden (2) aus Metallblech, dass Brennmaterial oder Glut wegen der nach unten hin geschlossenen Form nicht aus dem Feuerkorb herausfallen kann, aufweist, und einer sich daran nach oben hin anschließenden Ummantelung (3) aufweist, wobei die Ummantelung (3) aus Metallblech gebildet ist,
und wobei die aus Metall geformte Ummantelung (3) in ihrem oberen Bereich mehrere Durchbrüche als Tragegriffe (4a) aufweist, sodass sich die Form einer handelsüblichen Getränkekiste (4) ergibt, und
- das Gefache als Abstandshalter (6) für Getränkeflaschen als Pappstreifengitter gestaltet ist und in den Feuerkorb (1) eingesetzt ist.

2. System nach Anspruch 1, **dadurch gekennzeichnet, dass** die Tragegriffe (4a) jeweils mit einer Umschlaglasche (4a') versehen sind.

3. System nach einem der Ansprüche 1 bis 2, **dadurch gekennzeichnet, dass** in der Ummantelung (3) wenigstens ein Flaschenöffner (5) vorgesehen ist, insbesondere benachbart zu einem Eckbereich des Feuerkorbs eingestanzt oder ausgeschnitten ist.

4. System nach einem der Ansprüche 1 bis 3, **dadurch gekennzeichnet, dass** die Ummantelung (3) oder der Boden (2) angeformte oder angebrachte Stützfüße (3c) aufweist.

5. System nach Anspruch 4, **dadurch gekennzeichnet, dass** der Boden (2) des Feuerkorbs (1) mit der Ummantelung (3) verschweißt ist, insbesondere an einer weitgehend umlaufenden Abkantung punktgeschweißt ist.

6. System nach einem der vorhergehenden Ansprüche, **dadurch gekennzeichnet, dass** der Feuerkorb (1) mit Getränkeflaschen (7) befüllbar ist.

7. System nach einem der Ansprüche 1 bis 5 **dadurch gekennzeichnet, dass** auf dem Feuerkorb (1) ein als Sitzfläche ausgebildetem Deckel oder ein Grillrost aufgelegt ist, der bevorzugt höhenverstellbar ist.

8. Verwendung eines Systems nach einem der vorhergehenden Ansprüche 1 bis 5 oder 7, indem das Gefache zum Entzünden eines Feuers im Feuerkorb verwendet wird.

## Claims

1. System consisting of a fire basket and a divider, wherein
- the fire basket is designed for wood and similar fuels, has a heat-resistant bottom (2) made of sheet metal and closed in such a way that combustible material or embers cannot fall out of the fire basket due to the downwardly closed shape, and has a sheathing (3) adjoining it towards the top, wherein the sheathing (3) is formed from sheet metal
and wherein the sheathing (3) formed from metal has in its upper region a plurality of apertures as carrying handles (4a), so that the shape of a commercially available beverage crate is produced, and
- the divider is designed as a spacer (6) for beverage bottles as a cardboard strip grid and is inserted into the fire basket.

2. System according to claim 1, **characterized in that** the carrying handles (4a) are each provided with an envelope flap (4a').

3. System according to one of the claims 1 to 2, **characterized in that** at least one bottle opener (5) is provided in the sheathing (3), in particular punched or cut out adjacent to a corner region of the fire basket.

4. System according to one of claims 1 to 3, **characterized in that** the sheathing (3) or the bottom (2) has support feet (3c) which are integrally formed or attached thereto.

5. System according to claim 4, **characterized in that** the bottom (2) of the fire basket (1) is welded to the sheathing (3), in particular is spot-welded at a largely circumferential fold.

6. System according to one of the preceding claims, **characterized in that** the fire basket (1) is configured to be filled with beverage bottles (7).

7. System according to one of the claims 1 to 5, **characterized in that** a lid designed as a seating surface or a grill grate is placed on the fire basket (1), which is preferably adjustable in height.

8. Use of a system according to one of the preceding claims 1 to 5 or 7, in which the divider is used to light a fire in the fire basket.

## Revendications

1. Système constitué d'un panier à feu et d'un croisillon, dans lequel
- le panier à feu est conçu pour du bois et des combustibles similaires, présente un fond (2) en tôle métallique, résistant à la chaleur, fermé de telle sorte que du combustible ou des braises ne peuvent pas tomber du panier à feu en raison de la forme fermée vers le bas, et une enveloppe (3) se raccordant vers le haut, l'enveloppe (3) étant formée de tôle métallique,
et l'enveloppe (3) formée en métal présentant dans sa partie supérieure plusieurs ajours servant de poignées de transport (4a), de sorte qu'il en résulte la forme d'une caisse de boissons (4) usuelle dans le commerce, et
- le croisillon comme entretoise (6) pour les bouteilles de boissons étant conçu comme une grille de bandes de carton et étant inséré dans le panier à feu (1).

2. Système selon la revendication 1, **caractérisé en ce que** les poignées de transport (4a) sont chacune pourvues d'une languette de rabattement (4a').

3. Système selon l'une des revendications 1 à 2, **caractérisé en ce qu'**au moins un décapsuleur (5) est prévu dans l'enveloppe (3), en particulier estampé ou découpé au voisinage d'une zone d'angle du panier à feu.

4. Système selon l'une des revendications 1 à 3, **caractérisé en ce que** l'enveloppe (3) ou le fond (2) comporte des pieds de support (3c) moulés à ou attachés.

5. Système selon la revendication 4, **caractérisé en ce que** le fond (2) du panier à feu (1) est soudé avec l'enveloppe (3), en particulier est soudé par points au niveau d'un plis largement périphérique.

6. Système selon l'une des revendications précédentes, **caractérisé en ce que** le panier à feu (1) peut être rempli de bouteilles de boissons (7).

7. Système selon l'une des revendications 1 à 5, **caractérisé en ce qu'**un couvercle conçu comme une surface d'assise ou une grille, qui est de préférence réglable en hauteur, est posé sur le panier à feu (1).

8. Utilisation d'un système selon l'une des revendications 1 à 5 ou 7 précédentes, en ce que le croisillon est utilisé pour allumer un feu dans le panier à feu.
